# FASCICULE DE BREVET EUROPEEN

(11) **EP 2 694 321 B1**
(45) Date de publication et mention de la délivrance du brevet: **06.09.2017**
(21) Numéro de dépôt: 12717382.1
(22) Date de dépôt: 26.03.2012
(51) Int. Cl.: B60L 11/18, H02J 7/04, H01R 13/713

(54) **SYSTEME DE CHARGE D'UN VEHICULE ELECTRIQUE OU HYBRIDE**
SYSTEM ZUM AUFLADEN EINES ELEKTRO-ODER HYBRIDFAHRZEUGS
SYSTEM FOR CHARGING AN ELECTRIC OR HYBRID VEHICLE

(30) Priorité: 06.04.2011 FR 1152999
(43) Date de publication de la demande: 12.02.2014
(73) Titulaire: PSA Automobiles SA, 78300 Poissy (FR)
(72) Inventeur: MORAND, Nicolas, F-92400 Courbevoie (FR); DA CRUZ PEREIRA, Serge, F-95310 St Ouen L Aumone (FR); MAUDEMAIN, Aurelien, F-91180 St Germain Les Arpajon (FR)
(86) Numéro de dépôt international: PCT/FR2012/050626
(87) Numéro de publication internationale: WO 2012/168599

(56) Documents cités:
- WO-A2-2011/006775
- DE-A1- 3 331 847
- DE-A1-102009 025 302
- US-A1- 2010 301 802

## Description

La présente invention concerne de manière générale la sécurité des utilisateurs de véhicules électriques ou hybrides dont la charge se fait par connexion à un réseau électrique. Plus particulièrement, la présente invention concerne les véhicules électriques ou hybrides dont la charge peut être effectuée notamment sur une installation électrique privée ou réseau domestique.

Afin de standardiser les différentes méthodes de charge de ce type de véhicule, la norme IEC 61851-1:2010 préconise un système de charge au niveau véhicule devant communiquer avec le réseau de distribution d'électricité via une ligne dite pilote par l'intermédiaire d'un connecteur de charge en courant alternatif et imposant suivant le mode de charge utilisé, par exemple dans le mode 3 défini dans cette norme un certain nombre de fonctions additionnelles au moyen d'un circuit de commande appelé « circuit pilote ».

Le premier mode de charge, appelé « mode 1 », défini dans ce projet de norme correspond à un rechargement d'un véhicule électrique ou hybride sur une installation électrique privée ou réseau domestique. Ce mode de charge pose notamment le problème de nécessiter une puissance importante, pendant une durée importante et ceci de façon répétée pouvant entraîner un risque de surchauffe de certains éléments comme la prise de connexion électrique au réseau.

Bien qu'il soit connu dans l'art antérieur des dispositifs visant à protéger les prises électriques contre une éventuelle surchauffe qui peut provoquer des brûlures à un utilisateur manipulant de telles prises ou des incendies si la surchauffe est trop importante, ces dispositifs ne sont pas adaptés à un système de recharge tel que préconisé par les normes actuelles. Ainsi par exemple, le document DE3331847, qui présente une prise électrique équipée d'un bilame coupant le circuit si la prise s'échauffe, n'est pas adapté à un système de recharge permettant une charge suivant plusieurs modes via une ligne pilote. Le document WO 2011/006775 A2 divulgue un système de charge d'un véhicule électrique ou hybride comprenant un connecteur de charge en courant alternatif apte à être connecté à un réseau domestique de distribution d'électricité via une prise de connexion électrique, et des moyens de traitement pour déterminer l'utilisation ou non d'un mode de charge domestique (c'est à dire un mode 1 de charge comme défini dans la norme IEC 61851-1:2010). Ce système de charge ne permette pas une charge suivant plusieurs modes via une ligne pilote. Un but de la présente invention est de répondre aux inconvénients de l'art antérieur mentionné ci-dessus et en particulier, tout d'abord, de proposer un système de recharge sécurisé pour une charge via un réseau domestique de distribution d'électricité.

Pour cela un premier aspect de l'invention concerne un système de charge d'un véhicule électrique ou hybride comprenant un connecteur de charge en courant alternatif apte à être connecté à un réseau domestique de distribution d'électricité via une prise de connexion électrique munie d'un dispositif sensible à la température, et des moyens de traitement pour déterminer l'utilisation ou non d'un mode de charge domestique, caractérisé en ce que le système de charge comprend en outre des moyens de polarisation du dispositif sensible à la température, activés lorsqu'un mode de charge domestique est utilisé et des moyens de détermination d'une valeur représentative de la température de la prise de connexion électrique au moyen du dispositif sensible à la température polarisé. Un tel système de charge permet de détecter si le mode de charge utilisé est un mode de charge domestique (i.e. mode 1 selon la norme IEC 61851-1:2010), et dans ce cas de sécuriser la charge en contrôlant la température de la prise de connexion électrique par l'utilisation des moyens de polarisation permettant de surveiller l'évolution du dispositif sensible à la température intégré dans la prise au cours de la charge. Ce système de recharge est particulièrement adapté aux installations électriques anciennes, voire vétustes et/ou à l'utilisation de rallonges non appropriées dans la mesure où il permet de prévenir toute surchauffe au niveau de la connexion avec le réseau domestique de distribution électrique. En outre un tel système de charge s'avère économiquement viable dans la mesure où le surcoût pour sa réalisation est faible.

Selon un mode de réalisation avantageux, le connecteur de charge et la prise de connexion électrique sont reliés par des moyens de transmission comportant un fil de terre et au moins un fil pilote formant une ligne pilote. L'utilisation d'une telle ligne pilote permet d'assurer une communication standardisée entre le réseau de distribution et le système de charge du véhicule de manière à permettre en particulier une charge du véhicule selon le mode 1 ou le mode 3 tel que défini dans la norme IEC 61851-1:2010. Selon un autre mode de réalisation avantageux, il est prévu en outre un circuit pilote connecté à la ligne pilote pour assurer la compatibilité du système de charge avec d'autres modes de charge que le mode de charge domestique. L'intégration d'un tel circuit pilote permet de se conformer aux normes actuelles imposant des fonctions supplémentaires au système de charge pour permettre une charge selon différents modes. Ainsi par exemple, pour se conformer à la norme IEC 61851-1:2010, le circuit pilote est apte à vérifier la connexion du véhicule à un réseau de distribution d'électricité, à vérifier en continu l'intégrité d'une connexion protectrice à la terre, à exciter ou désexciter le système de charge et à sélectionner un taux de charge.

Selon un autre mode de réalisation avantageux, les moyens de polarisation comprennent une source de polarisation en série avec une résistance de polarisation. La source de polarisation sera de préférence une source de tension de sorte à pouvoir effectuer simplement la polarisation du dispositif sensible à la température au travers de la résistance de polarisation.

Selon une variante avantageuse, dans laquelle le circuit pilote comprend des moyens de blocage du passage du courant, la source de polarisation est une source de polarisation négative activant les moyens de blocage du circuit pilote. L'utilisation d'une source de polarisation négative permet d'éviter des perturbations de la mesure de température éventuellement occasionnées par des éléments du système de recharge, comme par exemple le circuit pilote en utilisant les moyens de blocage de ce circuit pilote.

Selon une autre variante avantageuse, l'activation des moyens de polarisation est effectuée par un commutateur agencé sur le circuit de polarisation de la ligne pilote par la mise en série de la source et la résistance de polarisation, par exemple en série entre ladite source et ladite résistance de polarisation. Le commutateur est commandé par la détermination de l'utilisation ou non d'un mode de charge domestique de sorte à ne mettre en oeuvre les moyens de polarisation uniquement lorsqu'ils sont nécessaires.

Selon un autre mode de réalisation avantageux, les moyens de détermination d'une valeur représentative de la température de la prise de connexion électrique sont identiques aux moyens de traitement pour déterminer l'utilisation ou non d'un mode de charge domestique. La réutilisation des mêmes moyens pour deux fonctions différentes permet de réduire les composants nécessaires au système de charge et donc d'en réduire le coût d'implémentation.

Selon un autre mode de réalisation avantageux, des moyens de coupure de la charge activés lorsque la valeur représentative de la température de la prise de connexion électrique déterminée est supérieure à un seuil prédéterminé. Ces moyens de coupure assurent la sécurité de la charge et de l'utilisateur en cas de détection d'une surchauffe au niveau de la prise en coupant la charge de sorte à empêcher toute surchauffe de la prise de connexion électrique pouvant être manipulée à la main et tout départ d'incendie en raison d'une telle surchauffe.

Selon un deuxième aspect, l'invention concerne un véhicule automobile électrique ou hybride comprenant un système de charge selon le premier aspect.

Selon un troisième aspect, l'invention concerne un procédé de charge d'un véhicule électrique ou hybride selon le deuxième aspect, connecté à un réseau domestique de distribution d'électricité via une prise de connexion électrique munie d'un dispositif sensible à la température, caractérisé en ce qu'il comprend les étapes consistant à : (i) détecter la connexion du connecteur de charge en courant alternatif à un réseau de distribution d'électricité ; (ii) déterminer l'utilisation ou non d'un mode de charge domestique ; (iii) polariser le dispositif sensible à la température de la prise de connexion électrique lorsque le mode de charge utilisé est un mode de charge domestique ; et (iv) déterminer une valeur représentative de la température de la prise de connexion électrique au moyen du dispositif sensible à la température polarisé. Dans une variante, les étapes (i) et (ii) peuvent être inversées.

D'autres caractéristiques et avantages de la présente invention apparaîtront plus clairement à la lecture de la description détaillée qui suit de modes de réalisation de l'invention donnés à titre d'exemples nullement limitatifs et illustrés par le dessin annexé, dans lequel :

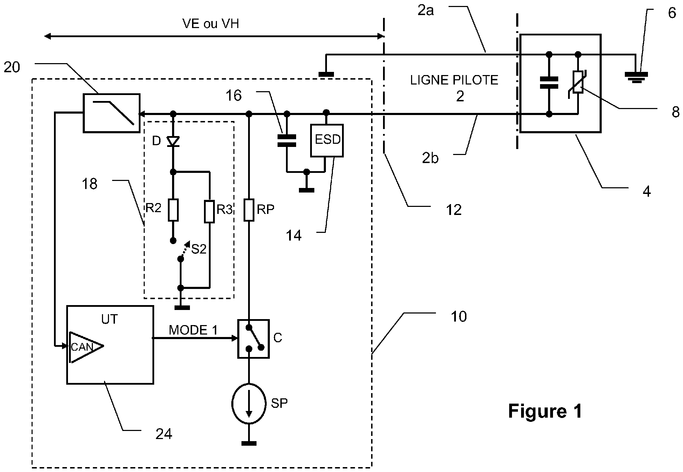

- la figure 1 représente schématiquement sous forme de blocs fonctionnels un système de charge connecté via une ligne pilote et une prise de connexion électrique à un réseau de distribution électrique selon un mode de réalisation de l'invention.

Comme cela est visible sur la figure 1, le véhicule électrique ou hybride, correspondant à la partie notée VE ou VH, est connecté à un réseau de distribution d'électricité via une ligne pilote 2 et une prise de connexion électrique 4. La prise de connexion est mise à la terre 6 au niveau du point de rechargement.

Considérons tout d'abord la prise de connexion électrique 4. Elle comporte un dispositif sensible à la température 8 pouvant être réalisé par exemple au moyen d'une thermistance, comme représenté, ou encore d'un bilame éventuellement en série avec une résistance. La prise peut également comporter un condensateur ou un dispositif équivalent monté en dérivation et/ou en série avec le dispositif sensible à la température 8 dans un but de protection contre les perturbations transitoires.

Considérons ensuite la ligne pilote 2 reliant la prise de connexion électrique 4 à un système de charge 10 du véhicule électrique ou hybride (VE ou VH). La ligne pilote 2 sert de moyen de transmission entre le système de charge 10 et le réseau de distribution d'électricité. Cette ligne pilote comporte un fil de terre 2a reliant la terre 6 à une extrémité du dispositif sensible à la température et à un potentiel de référence du véhicule et au moins un fil 2b appelé « pilote », reliant l'autre extrémité du dispositif sensible à la température au véhicule. Le fil pilote 2b est connecté au système de recharge pour permettre la communication avec le dispositif sensible à la température, alors qu'en mode 3, il permettrait la communication avec le point du rechargement relié au réseau de distribution d'électricité.

Considérons maintenant le système de charge 10 de la ou des batteries du véhicule électrique ou hybride. En entrée du système de charge est prévu un connecteur de charge 12 permettant la connexion de la ligne pilote 2 et de la prise de connexion électrique. Le connecteur de charge 12 est un connecteur en courant alternatif permettant, en mode 1, de le connecter à un réseau domestique délivrant un courant alternatif. On notera au passage que la masse du système de charge est équipotentielle avec la terre, par l'intermédiaire du fil de terre 2a.

Il est de préférence prévu de pourvoir le système de charge de moyens de protection 14 contre les décharges électrostatiques ESD, par exemple montés en dérivation et/ou en série sur le fil pilote 2b. Le fil pilote 2b peut également attaquer le système de charge 10 du véhicule par l'intermédiaire d'un condensateur 16 ou un dispositif équivalent monté en dérivation et/ou en série avec les moyens de protection 14 contre les décharges électrostatiques ESD (comme représenté) et contre les perturbations transitoires.

Il est également prévu de pourvoir le système de charge 10 d'un circuit appelé circuit pilote 18. Ce circuit pilote comprend une diode D, des résistances R2 et R3, et un commutateur S2. Leurs modes de connexion sont définis par la norme IEC 61851-1:2010. Ce circuit pilote a pour fonction de confirmer la connexion du véhicule au point de rechargement sur un réseau de distribution d'électricité, de confirmer en continu l'intégrité d'une connexion protectrice à la terre, d'exciter ou de désexciter le système de charge et de sélectionner un taux de charge de manière à fournir les fonctions additionnelles requises pour un mode de charge autre (i.e. mode 3) que le mode de charge domestique ou mode 1 défini dans le projet de norme suscité.

Le fil pilote 2b peut ensuite attaquer des moyens de traitement comprenant par exemple un filtre passe-bas dont la sortie est connectée avec un convertisseur analogique numérique (CAN), dont la sortie est elle-même connectée à une unité de traitement (UT). L'unité de traitement peut être par exemple un microcontrôleur, un microprocesseur, un circuit logique programmable et effaçable (EPLD comme « Erasable Programmable Logic Device ») ou une association de plusieurs de ces composants électroniques et/ou de composants équivalents. Le convertisseur analogique numérique peut être intégré à l'unité de traitement, comme par exemple dans le cas d'un microcontrôleur. L'unité de traitement fournit une information logique de type variable booléenne (notée « mode 1 »), indiquant, quand elle est vraie, que le rechargement en cours est effectué par connexion directe à une prise de courant d'un réseau domestique local, tel que défini par la norme IEC 61851-1:2010. Enfin, le système de charge comprend des moyens de polarisation comprenant de préférence une source de polarisation SP en série avec une résistance de polarisation RP. Ces moyens de polarisation sont mis en oeuvre par un commutateur C actionné par l'intermédiaire de l'information booléenne « mode 1 ». Les moyens de polarisation ont pour fonction de polariser le dispositif sensible à la température 8 à une tension prédéterminée par la source de polarisation SP via la résistance RP, ceci uniquement quand ladite information booléenne « mode 1 » est vraie. La source de polarisation est avantageusement une source de tension négative, par exemple de -12V par rapport à la masse.

Nous allons maintenant expliquer le fonctionnement du système de recharge selon le mode de réalisation représenté à la figure 1.

Quand le rechargement du véhicule par un réseau de distribution ne se fait pas en mode domestique ou mode 1 selon la norme IEC 61851-1:2010, le signal mode 1 commande le commutateur C pour qu'il reste ouvert, de sorte que les moyens de polarisation restent sans effet.

Alternativement, quand le rechargement se fait en mode domestique ou mode 1 selon la norme IEC 61851-1:2010, le signal mode 1 commande le commutateur C pour qu'il soit fermé. En conséquence de quoi le dispositif sensible à la température est polarisé par la source de tension SP via la résistance RP. Suite à cette polarisation, une valeur représentative de la température du dispositif sensible à la température polarisé et donc la température de la prise de connexion peuvent être déterminées par une unité de traitement, de préférence la même que celle utilisée pour la détermination du mode de charge. Cette valeur représentative de la température peut être déterminée par toute méthode adéquate y compris en utilisant un algorithme et éventuellement un logiciel approprié(s) spécifique(s), en utilisant éventuellement, comme représenté, le même filtre passe-bas et le même convertisseur analogique numérique que pour l'analyse de la ligne pilote en mode 3.

Enfin on notera que l'utilisation d'une source négative de polarisation SP du dispositif sensible à la température permet d'éviter que le circuit pilote, notamment les composants D, R3 et éventuellement R2, ne perturbe la mesure de température de la prise de connexion électrique car la diode D bloque la majeure partie du passage du courant lorsque la tension du fil pilote est négative.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Système de charge (10) d'un véhicule électrique ou hybride comprenant un connecteur de charge (12) en courant alternatif apte à être connecté à un réseau domestique de distribution d'électricité via une prise de connexion électrique (4) munie d'un dispositif sensible à la température (8), et des moyens de traitement (20, CAN, UT) pour déterminer l'utilisation ou non du mode 1 de charge comme défini dans la norme IEC 61851-1:2010, **caractérisé en ce que** le système de charge comprend en outre des moyens de polarisation (SP, RP) du dispositif sensible à la température, activés lorsque le mode 1 de charge est utilisé et des moyens de détermination (24) d'une valeur représentative de la température de la prise de connexion électrique au moyen du dispositif sensible à la température polarisé.

2. Système de charge (10) selon la revendication 1, **caractérisé en ce que** le connecteur de charge (12) et la prise de connexion électrique (8) sont reliés par des moyens de transmission comportant un fil de terre (2a) et au moins un fil pilote (2b) formant une ligne pilote (2).

3. Système de charge (10) selon la revendication 2, **caractérisé en ce qu'**il comprend en outre un circuit pilote (18) connecté à la ligne pilote (2) pour assurer la compatibilité du système de charge avec d'autres modes de charge que le mode 1.

4. Système de charge (10) selon l'une des revendications 1 à 3, **caractérisé en ce que** les moyens de polarisation comprennent une source de polarisation (SP) en série avec une résistance de polarisation (RP).

5. Système de charge (10) selon la revendication 3 et 4, dans lequel le circuit pilote (18) comprend des moyens de blocage (D) du passage du courant, et **caractérisé en ce que** la source de polarisation (SP) est une source de polarisation négative activant les moyens de blocage du circuit pilote.

6. Système de charge (10) selon la revendication 4 ou 5, **caractérisé en ce que** l'activation des moyens de polarisation (SP, RP) est effectuée par un commutateur (C) agencé sur le circuit de polarisation de la ligne pilote par la mise en série de la source et la résistance de polarisation.

7. Système de charge (10) selon l'une des revendications 1 à 6, **caractérisé en ce que** les moyens de détermination (UT) d'une valeur représentative de la température de la prise de connexion électrique et les moyens de traitement (20, CAN, UT) pour déterminer l'utilisation ou non du mode 1 de charge partagent une même unité de traitement (UT).

8. Système de charge (10) selon l'une des revendications 1 à 7, **caractérisé en ce qu'**il comprend des moyens de coupure de la charge activés lorsque la valeur représentative de la température de la prise de connexion électrique (4) déterminée est supérieure à un seuil prédéterminé.

9. Véhicule automobile électrique ou hybride comprenant un système de charge (10) selon l'une des revendications 1 à 8.

10. Procédé de charge d'un véhicule électrique ou hybride selon la revendication 9, connecté à un réseau domestique de distribution d'électricité via une prise de connexion électrique (4) munie d'un dispositif sensible à la température (8), **caractérisé en ce qu'**il comprend les étapes consistant à :
- détecter la connexion du connecteur de charge (12) en courant alternatif à un réseau de distribution d'électricité ;
- déterminer l'utilisation ou non du mode 1 de charge;
- polariser le dispositif sensible à la température (8) de la prise de connexion électrique lorsque le mode de charge utilisé est le mode 1 de charge ; et
- déterminer une valeur représentative de la température de la prise de connexion électrique au moyen du dispositif sensible à la température polarisé.

## Patentansprüche

1. System zum Aufladen (10) eines Elektro- oder Hybridfahrzeugs, umfassend einen Ladestecker (12), mit Wechselstrom, der ausgelegt ist, um mit einem Hausnetz zur Elektrizitätsverteilung über eine elektrische Anschlussbuchse (4) verbunden zu sein, die mit einer temperaturempfindlichen Vorrichtung (8) ausgestattet ist, und Bearbeitungsmittel (20, CAN, UT), um die Verwendung oder Nichtverwendung des Modus 1 zum Aufladen zu bestimmen, wie in der Norm IEC 61851-1:2010 definiert, **dadurch gekennzeichnet, dass** das System zum Aufladen außerdem Mittel zur Polarisierung (SP, RP) der temperaturempfindlichen Vorrichtung umfasst, die aktiviert sind, wenn der Modus 1 zum Aufladen verwendet wird, und Mittel zum Bestimmen (24) eines Werts, der für die Temperatur der elektrischen Anschlussbuchse repräsentativ ist, mit Hilfe der polarisierten temperaturempfindlichen Vorrichtung.

2. System zum Aufladen (10) nach Anspruch 1, **dadurch gekennzeichnet, dass** der Ladestecker (12) und die elektrische Anschlussbuchse (4) durch Übertragungsmittel verbunden sind, umfassend einen Erdungsdraht (2a) und mindestens einen Steuerdraht (2b), der eine Steuerleitung (2) bildet.

3. System zum Aufladen (10) nach Anspruch 2, **dadurch gekennzeichnet, dass** es außerdem eine Steuerschaltung (18) umfasst, die mit der Steuerleitung (2) verbunden ist, um die Kompatibilität des Systems zum Aufladen mit anderen Modi zum Aufladen als Modus 1 sicherzustellen.

4. System zum Aufladen (10) nach einem der Ansprüche 1 bis 3, **dadurch gekennzeichnet, dass** die Mittel zur Polarisierung eine Polarisierungsquelle (SP) in Reihe mit einem Polarisierungswiderstand (RP) umfassen.

5. System zum Aufladen (10) nach Anspruch 3 und 4, wobei die Steuerschaltung (18) Mittel zur Blockierung (D) des Durchgangs des Stroms umfasst, und **dadurch gekennzeichnet, dass** die Polarisierungsquelle (SP) eine negative Polarisierungsquelle ist, die die Mittel zur Blockierung der Steuerschaltung aktiviert.

6. System zum Aufladen (10) nach Anspruch 4 oder 5, **dadurch gekennzeichnet, dass** die Aktivierung der Polarisierungsmittel (SP, RP) durch einen Schalter (C), der auf der Polarisierungsschaltung der Steuerlinie angeordnet ist, durch Anbringen in Reihe der Polarisierungsquelle und des Polarisierungswiderstands durchgeführt wird.

7. System zum Aufladen (10) nach einem der Ansprüche 1 bis 6, **dadurch gekennzeichnet, dass** die Mittel zum Bestimmen (UT) eines Werts, der für die Temperatur der elektrischen Anschlussbuchse repräsentativ ist, und die Bearbeitungsmittel (20, CAN, UT), um die Verwendung oder Nichtverwendung von Modus 1 zum Aufladen zu bestimmen, eine gleiche Bearbeitungseinheit (UT) teilen.

8. System zum Aufladen (10) nach einem der Ansprüche 1 bis 7, **dadurch gekennzeichnet, dass** es Mittel zum Unterbrechen des Aufladens umfasst, die aktiviert sind, wenn der repräsentative Wert der bestimmten Temperatur der elektrischen Anschlussbuchse (4) größer als ein vorbestimmter Schwellenwert ist.

9. Elektrisches oder hybrides Kraftfahrzeug, umfassend ein System zum Aufladen (10) nach einem der vorhergehenden Ansprüche 1 bis 8.

10. Verfahren zum Aufladen eines Elektro- oder Hybridfahrzeugs nach Anspruch 9, verbunden mit einem Hausnetz zur Elektrizitätsverteilung über ein elektrische Anschlussbuchse (4), die mit einer temperaturempfindlichen Vorrichtung (8) ausgestattet ist, **dadurch gekennzeichnet, dass** es die folgenden Schritte umfasst:
- Nachweisen der Verbindung des Ladesteckers (12) mit Wechselstrom an ein Hausnetz zur Elektrizitätsverteilung;
- Bestimmen der Verwendung oder Nichtverwendung von Modus 1 zum Aufladen;
- Polarisieren der temperaturempfindlichen Vorrichtung (8) der elektrischen Anschlussbuchse, wenn der verwendete Modus des Aufladens der Modus 1 des Aufladens ist; und
- Bestimmen eines Werts, der repräsentativ für die Temperatur der elektrischen Anschlussbuchse ist, mit Hilfe der polarisierten temperaturempfindlichen Vorrichtung.

## Claims

1. System for charging (10) an electric or hybrid vehicle including an AC charging connector (12) that is connectable to a domestic power-distribution network via an electrical-connection outlet (4) having a temperature-sensitive device (8), and a processing means (20, CAN, UT) for determining whether or not to use a charging mode 1 such as defined in the standard IEC 61851-1:2010, **characterised in that** the system for charging further comprises means for polarising (SP, RP) the temperature-sensitive device, activated when the charging mode 1 is used and means for determining (24) a value representing the temperature of the electrical-connection outlet by means of the polarised temperature-sensitive device.

2. System for charging (10) according to claim 1, **characterised in that** the charging connector (12) and the electrical-connection outlet (4) are connected by means of transmission comprising a ground wire (2a) and at least one pilot wire (2b) forming a pilot line (2).

3. System for charging (10) according to claim 2, **characterised in that** it further comprises a pilot circuit (18) connected to the pilot line (2) in order to ensure the compatibility of the system for charging with charging modes other than the mode 1.

4. System for charging (10) according to one of claims 1 to 3, **characterised in that** the means for polarising include a source of polarisation (SP) in series with a polarisation resistance (RP).

5. System for charging (10) according to claim 3 and 4, wherein the pilot circuit (18) comprises means for blocking (D) the passage of the current, and **characterised in that** the source of polarisation (SP) is a source of negative polarisation that activates the means of blocking of the pilot circuit.

6. System for charging (10) according to claim 4 or 5, **characterised in that** the activation means for polarising (SP, RP) is carried out by a switch (C) arranged on the polarisation circuit of the pilot line by the putting into series of the polarisation source and resistance.

7. System for charging (10) according to one of claims 1 to 6, **characterised in that** the means for determining (UT) a value representing the temperature of the electrical connection outlet and the processing means (20, CAN, UT) for determining whether or not to use a charging mode 1 share the same processing unit (UT).

8. System for charging (10) according to one of claims 1 to 7, **characterised in that** it comprises means for cutting off the charge activated when the determined value representing the temperature of the electrical-connection outlet (4) is greater than a predetermined threshold.

9. Electric or hybrid vehicle comprising a system for charging (10) according to one of claims 1 to 8.

10. Method for charging an electric or hybrid vehicle according to claim 9, connected to a domestic network for the distribution of electricity via an electrical-connection outlet (4) having a temperature-sensitive device (8), **characterised in that** it comprises the steps consisting in:
- detecting the AC charging connector (12) in a distribution network of electricity;
- determining whether or not to use a charging mode 1;
- polarising the temperature-sensitive device (8) of the electrical connection outlet when the charging mode used is the charging mode 1; and
- determining a value that represents the temperature of the electrical connection outlet by means of the polarised temperature-sensitive device.
